# DEMANDE DE BREVET EUROPEEN

(11) **EP 3 884 801 A1**
(43) Date de publication de la demande: **29.09.2021**
(21) Numéro de dépôt: 21164107.1
(22) Date de dépôt: 22.03.2021
(51) Int. Cl.: A43B 5/04, A43B 17/00, B33Y 80/00

(54) **CHAUSSURE DE GLISSE COMPRENANT UN ELEMENT AMORTISSEUR**

(30) Priorité: 23.03.2020 FR 2002822
(71) Demandeur: Rossignol Lange S.R.L., 31044 Montebelluna (IT)
(72) Inventeur: Schievenin, Jimmy, 32038 Quero Vas (BL) (IT)
(74) Mandataire: Novaimo

(57) **Abrégé**

Elément de chaussure de ski ou de snowboard (110, 120, 121, 122), caractérisé en ce qu'il comprend un élément amortisseur (1, 11, 21, 31, 41, 130) comprenant au moins une couche formée par un ensemble de cellules (2, 12, 22, 32, 42) juxtaposées, la couche comprenant une surface d'appui (S1), chaque cellule comprenant une structure ouverte apte à se déformer consécutivement à un appui sur ladite surface d'appui (S1).

## Description

### Domaine Technique de l'invention

L'invention concerne un élément de chaussure de ski ou de snowboard. L'invention porte aussi sur une chaussure de ski ou de snowboard, notamment sur une chaussure de ski alpin.

### Etat de la technique antérieure

Les sports de glisse sur neige sont des sports dans lesquels un utilisateur guide une ou plusieurs planches de glisse attachées à ses pieds sur un terrain enneigé. Parmi les sports de glisse, on connaît notamment le ski alpin, le snowboard ou encore le ski de fond. Lors de la pratique des sports de glisse sur neige, les variations du terrain sont ressenties au niveau des pieds et du bas des jambes par l'intermédiaire de chaussures. La ou les chaussures jouent un rôle primordial dans la perception du terrain par l'utilisateur et dans les impulsions qu'il transmet à la ou aux planches de glisse.

En particulier, dans le domaine du ski alpin, un skieur enchaîne des virages et alterne des phases de flexion et d'extension des jambes. Pour une bonne maitrise de ses skis, le skieur doit conserver un appui tibial sur ses chaussures. Des caractéristiques d'élasticité, d'amorti et de rebond des chaussures de ski sont recherchées afin d'offrir un guidage à la fois précis et sans effort des skis. De plus, les chaussures de ski doivent être confortables, légères et solides. Elles doivent aussi protéger les pieds de l'utilisateur contre le froid et l'humidité. Elles doivent également permettre une fixation à des skis par l'intermédiaire de dispositifs de fixations. Enfin, elles doivent aussi être simples à utiliser et à fabriquer. Les chaussures de ski alpin connues de l'état de la technique ne permettent pas d'atteindre toutes ces exigences à la fois. Notamment, les utilisateurs doivent généralement faire un compromis entre le confort et la précision de guidage des skis.

### Présentation de l'invention

Le but de l'invention est de fournir un élément de chaussure de ski ou de snowboard remédiant aux inconvénients ci-dessus et améliorant les éléments de chaussure connus de l'art antérieur.

Plus précisément, un premier objet de l'invention est un élément de chaussure de ski ou de snowboard permettant un guidage précis et sans effort d'une ou plusieurs planches de glisse.

Un second objet de l'invention est un élément de chaussure de ski ou de snowboard confortable, robuste, léger, simple à utiliser et simple à fabriquer.

### Résumé de l'invention

L'invention se rapporte à un élément de chaussure de ski ou de snowboard comprenant un élément amortisseur comprenant au moins une couche formée par un ensemble de cellules juxtaposées, la couche comprenant une surface d'appui, chaque cellule comprenant une structure ouverte apte à se déformer consécutivement à un appui sur ladite surface d'appui.

Chaque cellule peut comprendre au moins une première ouverture orientée latéralement par rapport à ladite surface d'appui.

Chaque cellule peut comprendre au moins une deuxième ouverture s'étendant dans ladite surface d'appui.

L'élément de chaussure de ski ou de snowboard peut comprendre une zone d'appui tibiale, notamment une languette, ledit élément amortisseur s'étendant dans la zone d'appui tibiale.

L'élément de chaussure de ski ou de snowboard peut comprendre un support arrière destiné à entourer une partie arrière d'un bas de jambe, ledit élément amortisseur s'étendant au niveau du support arrière.

L'élément de chaussure de ski ou de snowboard peut comprendre une couche de support plus rigide que l'élément amortisseur et s'étendant parallèlement à l'élément amortisseur.

L'élément de chaussure de ski ou de snowboard peut comprendre une couche interne destinée à s'étendre le long d'une partie d'un pied et/ou le long d'une partie d'un bas de jambe.

L'élément de chaussure de ski ou de snowboard peut comprendre une couche externe destinée à s'étendre le long d'une coque.

L'élément amortisseur peut être amovible.

Chaque cellule dudit élément amortisseur peut comprendre une première base et un ensemble de segments élastiques dont une première extrémité est reliée à la première base, les bases de chaque cellule formant ladite surface d'appui, les segments de chaque cellule s'étendant en dehors de ladite surface d'appui, les segments de chaque cellule étant aptes à se déformer consécutivement à un appui sur ladite surface d'appui.

Les premières bases des différentes cellules peuvent comprendre une ouverture centrale, notamment les bases des différentes cellules peuvent comprendre une forme d'anneau ou une forme polygonale.

Les segments d'une même cellule peuvent être sans contact entre eux.

Chaque cellule de l'élément amortisseur peut être jointe aux cellules adjacentes uniquement par l'intermédiaire de ses segments.

Chaque cellule de l'élément amortisseur peut être jointe aux cellules adjacentes par l'intermédiaire de zones de jonction positionnées à mi-hauteur des segments.

Chaque cellule peut comprendre au moins une deuxième base, chaque segment de la cellule comprenant une deuxième extrémité reliée à la deuxième base.

L'invention se rapporte également à un chausson pour chaussure de ski ou de snowboard, le chausson comprenant un élément de chaussure de ski ou de snowboard tel que défini précédemment.

Le chausson peut comprendre une couche interne destinée à s'étendre le long d'une partie d'un pied et/ou le long d'une partie d'un bas de jambe et une couche externe destinée à s'étendre le long d'une coque, l'élément amortisseur étant positionné dans l'épaisseur du chausson entre la couche interne et la couche externe.

L'invention se rapporte également à une chaussure de ski ou de snowboard comprenant un élément de chaussure de ski ou de snowboard tel que défini précédemment et/ou un chausson tel que défini précédemment.

La chaussure peut comprendre un bas de coque et un collier articulé en rotation autour du bas de coque, ladite surface d'appui s'étendant parallèlement à une partie du collier.

La chaussure peut être une chaussure de ski alpin.

### Présentation des figures

Ces objets, caractéristiques et avantages de la présente invention seront exposés en détail dans la description suivante de divers modes de réalisation particuliers fait à titre non-limitatif en relation avec les figures jointes parmi lesquelles :
La figure 1 est une vue de côté d'une chaussure de glisse sur neige, notamment une chaussure de ski alpin.
La figure 2 est une vue de côté d'un chausson intérieur de la chaussure.
La figure 3 est une vue de face du chausson.
La figure 4A est une vue en coupe d'une paroi du chausson.
La figure 4B est une vue en coupe d'une paroi du chausson selon une première variante de réalisation de l'invention.
La figure 4C est une vue en coupe d'une paroi du chausson selon une deuxième variante de réalisation de l'invention.
La figure 5 est une vue de dessus d'un élément amortisseur d'un premier mode de réalisation d'une languette du chausson.
La figure 6 est une vue en perspective de l'élément amortisseur de la figure 5.
La figure 7 est une première vue de côté de l'élément amortisseur de la figure 5.
La figure 8 est une deuxième vue de côté de l'élément amortisseur de la figure 5.
La figure 9 est une vue en perspective d'un deuxième mode de réalisation d'une languette du chausson.
La figure 10 est une vue en perspective d'un troisième mode de réalisation d'une languette du chausson.
La figure 11 est une vue en perspective d'un quatrième mode de réalisation d'une languette du chausson.
La figure 12 est une vue en perspective d'un cinquième mode de réalisation d'une languette du chausson.
La figure 13 est une vue schématique en perspective d'un premier mode de réalisation d'un élément amortisseur.
La figure 14 est une vue schématique en perspective d'une cellule de l'élément amortisseur de la figure 13.
La figure 15 est une vue schématique en perspective d'un deuxième mode de réalisation d'un élément amortisseur.
La figure 16 est une vue schématique en perspective d'une cellule de l'élément amortisseur de la figure 15.
La figure 17 est une vue schématique en perspective d'un troisième mode de réalisation d'un élément amortisseur.
La figure 18 est une vue schématique en perspective d'une cellule de l'élément amortisseur de la figure 17.
La figure 19 est une vue de dessus de la cellule de la figure 14.
La figure 20 est une vue de côté de la cellule de la figure 14.
La figure 21 est une vue schématique en perspective d'un quatrième mode de réalisation d'un élément amortisseur.
La figure 22 est une vue en perspective et de dessous de l'élément amortisseur de la figure 13.
La figure 23 est une vue en perspective et de dessous de la cellule de la figure 14.
La figure 24 est une vue en perspective et de dessous de l'élément amortisseur de la figure 15.
La figure 25 est une vue en perspective et de dessous de la cellule de la figure 16.
La figure 26 est une vue de face d'un deuxième mode de réalisation d'un chausson pour chaussure de ski ou de snowboard.
La figure 27 est une vue de côté d'un troisième mode de réalisation d'un chausson pour chaussure de ski ou de snowboard.
La figure 28 est une vue de côté du chausson de la figure 26.
La figure 29 est une vue de dessus d'un support arrière de la chaussure de ski ou de snowboard.
La figure 30 est une vue en perspective d'un élément amortisseur du support arrière.
La figure 31 est une première vue schématique en perspective d'un cinquième mode de réalisation d'un élément amortisseur.
La figure 32 est une deuxième vue schématique en perspective de l'élément amortisseur de la figure 31.
La figure 33 est une vue schématique en perspective d'une cellule de l'élément amortisseur de la figure 31.

### Description détaillée

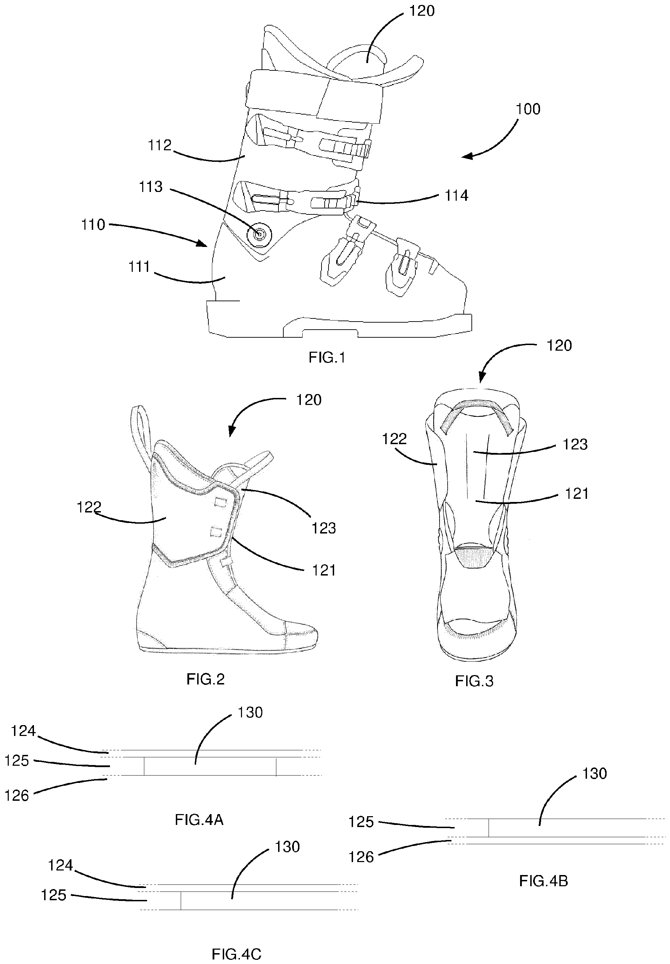

La figure 1 illustre une chaussure 100 de ski alpin selon un mode de réalisation de l'invention. La chaussure 100 comprend une coque 110 et un chausson 120 agencé à l'intérieur de la coque 110. La coque 110 est une enveloppe externe de la chaussure destinée à coopérer avec un dispositif de fixation pour fixer la chaussure 100 à un ski. Le chausson 120 est une partie de la chaussure 100 plus souple que la coque 110. Le chausson 120 peut être amovible par rapport à la coque 110 ou non. Il est intercalé entre la coque 110 et un pied d'un utilisateur. Le chausson 120 est destiné à procurer du confort et de l'isolation thermique au pied de l'utilisateur.

En variante d'une chaussure de ski alpin, l'invention pourrait être mise en œuvre pour toute autre chaussure convenant à la pratique d'un sport de glisse sur neige, par exemple une chaussure de snowboard, une chaussure de ski de fond ou une chaussure de ski de randonnée. De manière plus générale, l'invention pourrait être mise en œuvre pour la pratique de tous sports de glisse sur neige dans lequel un utilisateur contrôle une ou plusieurs planches de glisse avec ses pieds.

La coque 110 comprend un bas de coque 111 et un collier 112 articulé en rotation par rapport au bas de coque 111, autour d'un axe transversal 113. Le bas de coque 111 est destiné à entourer le pied tandis que le collier 112 est destiné à entourer le bas de la jambe de l'utilisateur. L'axe transversal 113 est sensiblement aligné sur l'axe d'articulation de la cheville de manière à permettre à l'utilisateur de fléchir son pied. La chaussure 100 comprend une certaine rigidité qui tend à rendre la rotation du collier 112 autour du bas de coque 111 plus ou moins difficile. La partie basse et la partie haute sont articulées de manière à permettre à la fois la marche à pied et une transmission optimale des impulsions de l'utilisateur, ces impulsions pouvant être transmises à la ou les planches de glisse par des appuis du tibia sur la chaussure. La coque 110 comprend en outre des moyens de fermeture 114 permettant de serrer la chaussure autour du pied et du bas de la jambe de l'utilisateur. La coque 110 peut être par exemple fabriquée principalement en plastique.

Les figures 2 et 3 illustrent le chausson 120 de la chaussure 100. Le chausson 120 est destiné à envelopper le pied et le bas de la jambe de l'utilisateur. Le chausson 120 comprend une languette 121 et un support arrière 122. La languette 121 est une partie avant du chausson 120 qui s'étend sensiblement depuis le dessus du pied jusqu'à une zone d'appui tibiale 123, c'est à dire une zone destinée à être positionnée en vis-à-vis du tibia de l'utilisateur. La zone d'appui tibiale est une partie du chausson positionnée au-dessus de l'articulation de la cheville sur laquelle l'utilisateur peut appuyer avec le bas de sa jambe. La languette 121 peut être un élément mobile du chausson 120 et apte à être repoussée vers l'avant pour agrandir l'ouverture par laquelle le pied est inséré et ainsi faciliter l'insertion du pied. La languette 121 peut être fixée au reste du chausson 120 uniquement par une partie inférieure de la languette de manière à faciliter son articulation. En variante, la languette 121 pourrait aussi être attachée au support arrière 122, le chausson présentant alors une élasticité suffisante pour se déformer et permettre le chaussage et le déchaussage du pied.

Le support arrière 122, que l'on peut dénommer selon l'anglicisme "spoiler", est un élément du chausson 120 destiné à s'étendre à l'arrière du bas de la jambe d'un utilisateur, en partie supérieure du chausson. Il s'étend donc en vis-à-vis du bas du mollet de l'utilisateur. Le support arrière 122 peut aussi s'étendre le long des côtés latéraux du bas de la jambe, au-dessus de la cheville. Le support arrière 122 est donc destiné à prendre appui sur le collier 112 de la coque entourant le chausson.

Dans ce document, l'expression "élément de chaussure de ski ou de snowboard " désigne toute sous-partie d'une chaussure de ski ou de snowboard. L'expression "élément de chaussure de ski ou de snowboard " peut donc désigner de manière générale le chausson 120 ou la coque 110 de la chaussure de ski ou de snowboard. L'expression "élément de chaussure de ski ou de snowboard " peut également désigner plus spécifiquement la languette 121 ou le support arrière 122 du chausson 120.

Le chausson 120 peut comprendre des parois constituées d'une superposition de plusieurs couches dans leur épaisseur. La figure 4A montre une vue en coupe d'une paroi de la languette 121 au niveau de la zone d'appui tibiale 123. La languette comprend une couche externe 124, une couche intermédiaire 125 et une couche interne 126. La couche externe se trouve contre la coque 110 de la chaussure et la couche interne se trouve contre le pied de l'utilisateur et notamment contre son tibia. La couche externe 124 peut être plutôt rigide et est utile pour la transmission des efforts du pied et de la jambe vers la coque de la chaussure et le ski et pour assurer l'étanchéité du chausson. La couche externe 124 peut par exemple être constituée d'un corps en plastique rigide sur lequel est fixé la couche intermédiaire 125. La couche intermédiaire 125 est une couche de rembourrage. La couche intermédiaire procure de l'amorti et de l'isolation thermique. La couche interne 126, ou doublure interne, qui peut se trouver en matériau textile, assure le confort du chausson. La languette peut comprendre la même structure également hors de la zone tibiale. D'une manière générale l'ensemble des parois du chausson, y compris le support arrière 122, peuvent comprendre une telle structure.

En variante, la couche interne ou la couche externe peuvent former une couche de support plus rigide que l'élément amortisseur, par exemple une couche en matériau plastique, de sorte que l'élément amortisseur puisse être comprimé contre cette couche.

La figure 4B montre une variante de réalisation de la languette 121. Dans cette variante de réalisation, la languette ne comprend pas de couche externe mais uniquement une couche intermédiaire 125 et une couche interne 126. La couche intermédiaire 125 est alors destinée à venir en contact directement contre la coque dans laquelle le chausson est inséré. La couche intermédiaire est alors en fait une couche externe du chausson.

Selon une autre variante de réalisation illustrée à la figure 4C, la languette ne comprend pas de couche interne mais uniquement une couche intermédiaire 125 et une couche externe 124. La couche intermédiaire 125 est alors destinée à venir en contact directement contre le pied ou le bas de la jambe de l'utilisateur. La couche intermédiaire est alors en fait une couche interne du chausson.

De telles variantes de réalisation sont non seulement plus simples à fabriquer mais elles permettent de rendre la couche intermédiaire directement accessible et visible.

La languette 121 du chausson 120 comprend un élément amortisseur 130. Selon un mode de réalisation de l'invention, l'élément amortisseur est intégré dans la zone d'appui tibiale 123 de la languette, dans l'épaisseur du chausson, entre la couche interne 126 et la couche externe 124 du chausson. L'élément amortisseur 130 est donc agencé dans la couche intermédiaire 125.

Comme nous le verrons par la suite, différents modes de réalisation de l'élément amortisseur sont proposés. Ce même élément amortisseur 130 pourra par la suite être désigné par les références 1, 11, 21, 31 ou 41 en fonction des modes de réalisation présentés. Comme nous le verrons également par la suite, l'élément amortisseur peut également être intégré en d'autres éléments de la chaussure de ski ou de snowboard.

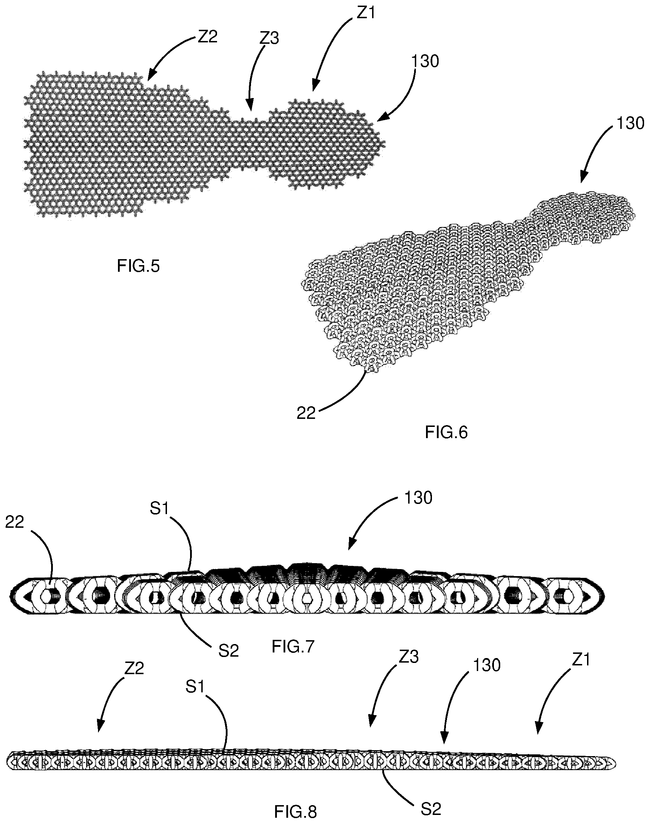

Les figures 5 à 12 illustrent différents modes de réalisation de la languette 121. Selon tous les modes de réalisation présentés, la languette comprend une première zone Z1 destinée à s'étendre sur le dessus du pied et une deuxième zone Z2 destinée à s'étendre face au bas de la jambe, contre le tibia de l'utilisateur. La deuxième zone Z2 comprend la zone d'appui tibiale 123. Les deux zones Z1 et Z2 se rejoignent au niveau d'une troisième zone Z3 plus étroite sensiblement positionnée en vis-à-vis de l'articulation de la cheville. La languette peut se plier au niveau de la troisième zone Z3 pour suivre les mouvements de la cheville. La languette présente sensiblement un plan de symétrie délimitant une partie droite et une partie gauche. Une même languette peut être utilisée pour un chausson droit ou un chausson gauche. En variante, la languette pourrait avoir une forme asymétrique, notamment pour s'adapter à l'anatomie de la jambe, en particulier au tibia. Dans ce cas, l'élément amortisseur pourrait également être de forme asymétrique. Selon une autre variante, la languette pourrait ne présenter que la zone Z2.

Selon un premier mode de réalisation de la languette, illustré sur les figures 5 à 8, la couche intermédiaire 125 de la languette 121 est intégralement ou quasi-intégralement formée par l'élément amortisseur 130. L'élément amortisseur 130 comprend une couche formée par un ensemble de cellules juxtaposées. La couche de cellules comprend une première surface d'appui S1 qui s'étend contre la couche externe 124 du chausson et une deuxième surface d'appui S2, opposée à la première surface d'appui S1, qui s'étend contre la couche interne 126 du chausson. Chaque cellule comprend une structure ouverte apte à se déformer consécutivement à un appui sur la surface d'appui S1 et/ou sur la surface d'appui S2.

Comme cela est bien visible sur les figures 7 et 8, l'élément amortisseur 130 peut présenter une épaisseur variable, notamment pour s'adapter à l'anatomie de la jambe, en particulier du tibia. Par exemple, il peut être le plus épais à hauteur du plan de symétrie de la languette et son épaisseur peut décroitre graduellement à mesure qu'on se rapproche des bords droits et gauches.

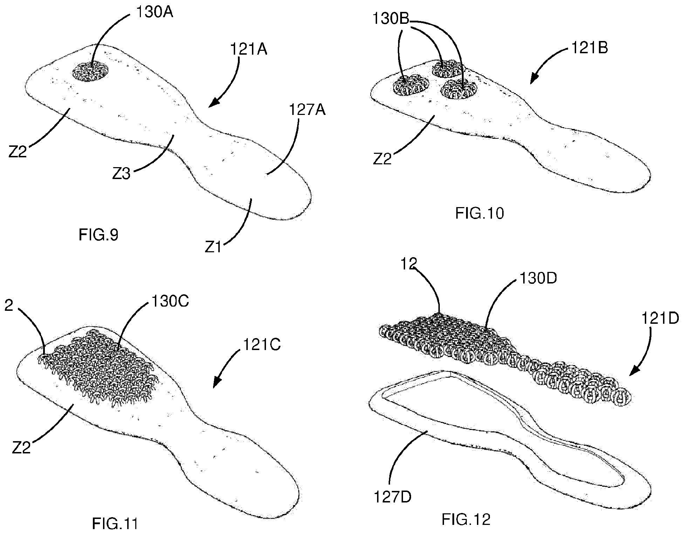

Les figures 9 à 12 illustrent des languettes 121A, 121B, 121C, 121D de chausson selon des variantes de réalisation plus économiques.

En référence à la figure 9, la languette 121A comprend un corps 127A en matériau souple et déformable, par exemple en tissu et/ou en mousse. Le corps 127A forme un support pour un unique élément amortisseur 130A agencé dans la zone Z2. En variante, le corps 127A pourrait être fabriqué dans un matériau plus rigide, comme par exemple du plastique, notamment s'il n'est pas destiné à entrer en contact direct avec la peau. L'élément amortisseur 130A est positionné sensiblement au centre de la deuxième zone Z2. L'élément amortisseur comprend une forme extérieure globalement circulaire. Cette version de la languette présente l'avantage d'être simple à fabriquer et économique car l'élément amortisseur a une taille réduite. En variante, l'élément amortisseur pourrait présenter une forme extérieure polygonale, par exemple carrée ou rectangulaire, ou encore présenter une forme allongée correspondant à l'anatomie de la jambe et notamment du tibia.

La languette peut comprendre un nombre quelconque d'éléments amortisseurs distincts, par exemple deux, trois, quatre ou cinq éléments amortisseurs distincts. Comme illustré sur la figure 10, la languette 121B peut par exemple comprendre trois éléments amortisseurs 130B distincts. Ces éléments amortisseurs 130B sont avantageusement positionnés dans la zone Z2 de la languette.

Comme illustré sur la figure 11, l'élément amortisseur 130C peut occuper sensiblement la majeure partie de la surface de la deuxième zone Z2. L'élément amortisseur 130C peut comprendre un contour extérieur globalement rectangulaire.

Comme illustré sur la figure 12, l'élément amortisseur 130D peut encore occuper la majeure partie de la surface de la languette. Il peut donc s'étendre à la fois dans les zones Z1, Z2 et Z3. Quel que soit le mode de réalisation de la languette, l'élément amortisseur peut prendre place dans un évidement pratiqué dans le corps 127D de la languette. Cet évidement peut être une ouverture traversant le corps 127D ou, en variante, être un simple renfoncement au niveau duquel le corps 127D présente une épaisseur moindre.

Selon une autre variante de réalisation, la languette pourrait être entièrement formée par l'élément amortisseur.

Ou encore, l'élément amortisseur pourrait s'étendre sur toute la surface de la languette et être soutenu par une structure support, par exemple en plastique, s'étendant parallèlement à l'élément amortisseur.

En remarque, l'élément amortisseur peut être protégé latéralement. L'élément amortisseur peut aussi être masqué à l'intérieur du chausson, ce qui permet d'éviter que des particules ou de la neige ne se logent à l'intérieur des cellules.

Nous allons à présent décrire plus en détails l'élément amortisseur.

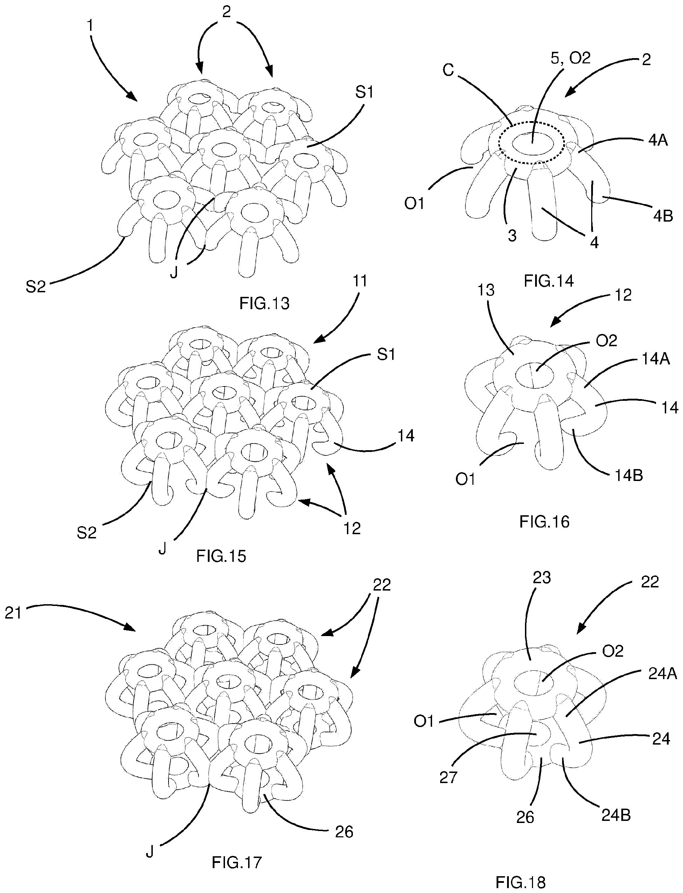

La figure 13 illustre un élément amortisseur 1 de la chaussure 100 selon un premier mode de réalisation de l'invention. L'élément amortisseur 1 comprend une couche formée par un ensemble de cellules 2 juxtaposées, c'est-à-dire positionnées côte-à-côte ou adjacentes les unes aux autres. Par conséquent, les cellules sont agencées régulièrement. Autrement dit, les cellules sont ordonnées, notamment agencées selon un motif reproductible spatialement. On comprend donc que l'élément amortisseur n'est pas une mousse car dans une mousse les bulles d'air sont agencées aléatoirement. Une des cellules 2 de l'élément amortisseur 1 est représentée sur la figure 14.

Chaque cellule 2 de l'élément amortisseur comprend une structure ouverte. Autrement dit, aucune cellule ne comprend un volume d'air clos défini par un ensemble de parois, tel qu'une alvéole fermée. Au contraire, de l'air peut librement circuler au travers d'une cellule 2, et donc au travers de l'élément amortisseur 1. Une structure ouverte peut notamment être obtenue en prévoyant dans chaque cellule de l'élément amortisseur une première ouverture O1 orientée latéralement par rapport à la surface d'appui S1 et/ou une deuxième ouverture O2 s'étendant dans la surface d'appui S1. La première ouverture O1 peut s'étendre le long d'une surface sécante à la surface d'appui S1. Ainsi, de l'air peut circuler au travers de l'élément amortisseur parallèlement à la surface d'appui S1, dans l'épaisseur de l'élément amortisseur 1, en passant au travers des premières ouvertures O1. Par l'expression " la deuxième ouverture O2 s'étend dans la surface d'appui S1", on comprend que les bords de l'ouverture O2 se trouvent sensiblement au niveau de la surface d'appui S1. Ainsi, de l'air peut circuler au travers de l'élément amortisseur perpendiculairement à la surface d'appui S1, en passant au travers des deuxièmes ouvertures O2.

On s'affranchit ainsi d'un désavantage lié à l'utilisation des alvéoles fermées qui est que l'effet amortissant est dû à la compression de l'air qu'elles renferment. La raideur des éléments amortisseurs comprenant des alvéoles fermées est dépendante des lois physiques de compression de l'air et ne peut pas être facilement modifiée. De plus, de telles alvéoles peuvent se crever, ce qui annule complètement et subitement leur effet amortissant.

Chaque cellule 2 de l'élément amortisseur comprend une base 3 et un ensemble de segments 4 élastiques dont une première extrémité 4A est reliée à la base 3. Selon le mode de réalisation illustré, l'élément amortisseur comprend sept cellules juxtaposées, notamment une cellule centrale et six cellules périphériques. En variante ce nombre pourrait être tout nombre supérieur ou égal à deux.

La couche formée par l'ensemble des cellules 2 juxtaposées comprend une surface d'appui S1. L'ensemble des bases 3 de l'élément amortisseur forme la surface d'appui S1. Autrement dit, les bases 3 de chaque cellule 2 s'étendent principalement le long de la surface d'appui S1. Les cellules 2 sont donc positionnées côte-à-côte sensiblement parallèlement à la surface d'appui S1. La surface d'appui S1 peut s'étendre parallèlement à un plan comme cela apparaît sur la figure 13 ou en variante s'étendre le long d'une surface courbe et/ou ondulée. Elle peut par exemple s'étendre le long de tout ou partie d'une paroi du chausson. En particulier, lorsque l'élément amortisseur est intégré à une languette de chaussure de ski ou de snowboard, la surface d'appui S1 peut avoir une forme épousant sensiblement l'avant du bas de la jambe (c'est-à-dire la zone du tibia), et la surface d'appui S2 peut avoir une forme épousant la face intérieure du collier de la chaussure

En référence à la figure 14, les bases 3 des différentes cellules comprennent une ouverture centrale 5. Cette ouverture centrale 5 constitue la deuxième ouverture O2 de la cellule 2. Notamment, les bases 3, comprennent une forme d'anneau, c'est-à-dire une forme toroïdale. En variante, les bases pourraient ne pas comprendre d'ouverture centrale. Elles pourraient consister en une simple zone de convergence entre les différents segments 4. Cette zone de convergence pourrait alors être ponctuelle ou quasi ponctuelle. En lieu et place d'une forme d'anneau, les bases 3 pourraient aussi avoir toute forme polygonale, ou encore la forme d'un anneau irrégulier, c'est-à-dire un anneau déformé ou courbé. Par exemple, les extrémités 4A des segments 4 pourraient être reliées par des segments de droite. Avantageusement, l'ouverture centrale 5 permet d'alléger la cellule et facilite sa déformation.

Pour chaque base 3 on peut définir une surface de contact C s'étendant dans la surface d'appui S1. Cette surface de contact C est constituée par l'ensemble des points de la base 3 appartenant à la surface d'appui S1. Comme dans le mode de réalisation présenté la base présente une forme d'anneau, la surface de contact C a sensiblement la forme d'un cercle ou d'un disque. Toutefois, cette surface de contact C pourrait présenter une forme différente. Elle pourrait présenter une forme irrégulière. La surface de contact C pourrait aussi être une surface discontinue. Ainsi, chaque base de cellule offre une surface d'appui suffisante permettant de bien répartir les efforts exercés dessus, et donc de réduire les pressions locales. La surface d'appui S1 de l'élément amortisseur peut être formée par l'ensemble des surfaces de contact C des cellules de l'élément amortisseur. En remarque, en raison de l'élasticité de la base 3, la surface de contact C peut augmenter lorsqu'on augmente la force sur la surface d'appui S1.

Les segments 4 de chaque cellule s'étendent en dehors de la surface d'appui S1. Autrement dit, les segments 4 sont saillants par rapport à la surface d'appui S1 : ils ne s'étendent pas parallèlement à la surface d'appui S1 mais dans un demi-espace défini d'un même côté de la surface d'appui S1. Lorsqu'on considère une cellule isolément, la deuxième extrémité 4B de chaque segment est libre. Les segments 4 d'une même cellule sont sans contacts entre eux. Notamment, les segments d'une même cellule sont reliés à la base de ladite cellule en des zones de la base distinctes et séparées les unes des autres. Ainsi les premières ouvertures O1 de la cellule 1 peuvent être formées entre deux segments 4 adjacents. Dans ce premier mode de réalisation, chaque cellule de l'élément amortisseur est jointe aux cellules adjacentes uniquement par l'intermédiaire de ses segments, notamment par l'intermédiaire des extrémités 4B de ses segments. En particulier, les différentes bases 3 sont sans contact entre elles. Les segments 4 peuvent être sensiblement parallèles à la base 3 au niveau de leur point de jonction à la base.

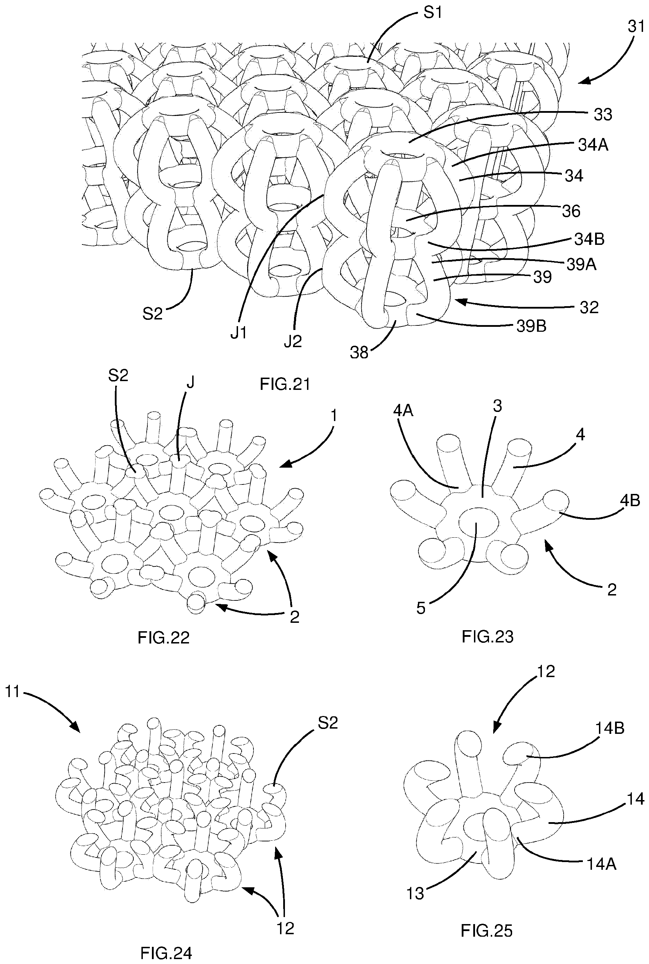

Des surfaces de contact à chaque extrémité 4B des segments 4 définissent une deuxième surface d'appui S2. Cette deuxième surface d'appui S2 peut être un plan comme cela apparait sur les figures 13 et 22, ou en variante être courbée ou ondulée. La deuxième surface d'appui S2 peut s'étendre sensiblement parallèlement à la première surface d'appui S1. Les deux surfaces d'appui S1 et S2 sont des surfaces opposées de l'élément amortisseur. L'une ou l'autre des deux surfaces d'appui S1 ou S2 peut être tournée vers une partie du pied ou du bas de la jambe d'un utilisateur, tandis que l'autre surface d'appui S1 ou S2 peut être tournée vers l'extérieur.

Selon un mode de réalisation, l'élément amortisseur est intégré dans la chaussure de sorte à ce que ses deux surfaces d'appui S1, S2 entrent en contact avec des couches de support pour éviter un contact direct de l'une des surfaces d'appui S1 ou S2 contre le pied de l'utilisateur ou avec l'environnement extérieur, et notamment la coque externe. Selon d'autres variantes de réalisation, l'élément amortisseur est intégré dans la chaussure de sorte que la surface d'appui S1 ou S2, voire les deux surfaces d'appui S1 et S2 entrent en contact contre le pied de l'utilisateur et/ou avec l'environnement extérieur, notamment la coque externe.

Les segments 4 de chaque cellule comprennent une forme identique mais en variante, une cellule pourrait avoir des segments de formes différentes. Selon le mode de réalisation présenté sur les figures 13 et 14, les segments ont une forme courbe. Autrement dit, le segment comprend deux tangentes distinctes qui ne sont pas parallèles entre elles. Notamment une tangente des segments 4 au niveau de leur deuxième extrémité 4B peut être sensiblement perpendiculaire à la surface d'appui S1. Les segments ont au moins grossièrement une forme en arc de cercle avec un centre de courbure à l'intérieur de la cellule. Les cellules 2 ont une enveloppe extérieure présentant grossièrement la forme d'une demi-sphère. Selon une variante de réalisation, les segments pourraient être rectilignes (l'enveloppe extérieure présentant alors une forme en tronc de cône) ou en zigzag, ou prendre la forme d'ondulations, ou encore présenter une courbure en arc de cercle dont le centre de courbure est à l'extérieur de la cellule.

Selon le mode de réalisation présenté, chaque cellule comprend six segments répartis autour de la base 3 à intervalles réguliers. En variante, le nombre de segments pourrait être différent. Par exemple chaque cellule pourrait comprendre trois segments, quatre segments, cinq segments, six segments, huit segments, ou encore tout autre nombre de segments. Ces segments pourraient au contraire être agencés irrégulièrement autour de la base. Toutes les cellules d'un même élément amortisseur peuvent comprendre le même nombre de segments, ou en variante, comprendre un nombre de segments différent.

Plus généralement, toutes les cellules d'un même élément amortisseur peuvent être identiques, ou en variante, être différentes les unes des autres. Les cellules d'un même élément amortisseur peuvent différer les unes des autres par leur taille tout en conservant une architecture identique, notamment en conservant le même nombre de segments. Les différentes cellules d'un même élément amortisseur peuvent être au moins globalement homothétiques. Finalement, un même élément amortisseur, peut donc avoir des cellules de tailles différente et/ou d'orientation différente.

La base 3 et les segments 4 des cellules 2 peuvent être formés par un fil de section constante. Notamment cette section peut être circulaire. La section des segments est notamment bien visible sur les figures 22 et 23 présentant respectivement l'élément amortisseur et une cellule 2 en vue de dessous. En variante, la section de ces fils pourrait être différente, par exemple elliptique ou ovoïde. Il est également possible de faire varier le diamètre de la section du fil, au sein d'une même cellule, ou encore entre deux cellules différentes de l'élément amortisseur. La section du fil constituant un segment ou une base peut également être variable.

Comme cela apparait sur la figure 13, une cellule 2 peut être en contact avec une cellule adjacente, ou autrement dit une cellule voisine, par l'intermédiaire des extrémités 4B de deux de ses segments. Un segment 4 d'une cellule peut être en contact avec un segment d'une première cellule adjacente et en contact avec le segment d'une deuxième cellule adjacente. Sur la figure 13, on définit par J la zone de jonction entre les segments 4 de deux cellules adjacentes. Cette zone de jonction peut être quasi-ponctuelle. La zone de jonction J peut se trouver au lieu de convergence de deux ou de trois segments appartenant chacun respectivement à deux ou à trois cellules différentes. La zone de jonction J entre deux segments adjacents 4 peut être limitée à une surface de taille suffisante pour assurer la cohésion entre les cellules. Les cellules peuvent être soudées ensemble au niveau des zones de jonction J. Deux cellules voisines sont reliées ensemble par deux zones de jonction J. Les zones de jonction J forment des nœuds de connexion des différentes cellules. Ainsi, l'élément amortisseur se présente d'un seul tenant. Les zones de jonction J forment aussi des articulations entre les différentes cellules qui permettent à l'élément amortisseur de se déformer plus facilement. L'élément amortisseur peut ainsi facilement épouser les formes naturelles du pied ou du bas de la jambe de l'utilisateur.

Selon le mode de réalisation présenté, une cellule peut avoir jusqu'à six cellules voisines. C'est notamment le cas de la cellule centrale de l'élément amortisseur représenté sur la figure 13. Une cellule positionnée au bord de l'élément amortisseur 1 a donc moins de six cellules voisines. Par "cellule voisine" d'une cellule donnée, on désigne les cellules qui sont en contact avec la cellule donnée par l'intermédiaire des segments. Notamment, le terme "cellule voisine" ne désigne pas une cellule qui serait en contact avec la cellule donnée par l'intermédiaire de leurs bases respectives. Les extrémités 4B de chaque segment d'une cellule sont agencées selon un hexagone régulier. La juxtaposition de ces hexagones réguliers forme un pavage régulier du plan. Le motif ainsi obtenu peut donc occuper une surface quelconque en adaptant le nombre de cellule. En variante, un pavage de plan ou de surface pourrait être obtenu grâce à des formes géométriques différentes d'un hexagone régulier. Notamment, un pavage du plan peut être obtenu avec des triangles, des quadrilatères, des pentagones, et/ou des octogones. Dans ce cas, les cellules sont conçues de sorte à ce que les extrémité 4B des segments coïncident avec les sommets de ces formes géométriques. Ainsi une cellule centrale peut avoir un nombre de cellules voisines différent de six. Des pavages différents peuvent aussi être obtenus lorsque les cellules présentent un nombre de segments différent de six et/ou lorsque chaque cellule de l'élément amortisseur est en contact avec une cellule voisine par l'intermédiaire d'un nombre de segments différent de deux. Par exemple une cellule donnée peut être en contact avec une cellule voisine par l'intermédiaire d'un seul segment, de trois segments, de quatre segments, voire encore d'avantage de segments. Les segments des cellules positionnées en périphérie de l'élément amortisseur qui ne sont reliés à aucun autre segment pourraient éventuellement être supprimés.

Les segments de chaque cellule sont aptes à se déformer consécutivement à un appui sur la surface d'appui S1. Pareillement, les segments de chaque cellule sont aptes à se déformer consécutivement à un appui sur la surface d'appui S2. Ainsi, les surfaces d'appui S1 et S2 peuvent se rapprocher l'une de l'autre sous l'effet d'un appui sur ces surfaces. Les surfaces d'appui peuvent se rapprocher seulement localement lorsque l'appui sur une des deux surfaces d'appui est local. Elles peuvent aussi se rapprocher globalement, lorsque l'appui est exercé sur toute la surface d'appui S1 ou S2. Les segments sont élastiques. Ainsi, chaque cellule peut reprendre sa position d'origine dès que l'appui cesse.

Les zones de jonction J entre les cellules confèrent une certaine rigidité à l'élément amortisseur. Les zones de jonction J influencent les déformations des segments 4 lors d'un appui sur la surface d'appui S1. Lorsqu'on appuie perpendiculairement à la surface d'appui S1 sur la base 3 d'une seule cellule, cette base 3 se rapproche de la deuxième surface d'appui S2, les segments 4 de cette cellule ont alors tendance à fléchir en direction des cellules adjacentes. Les segments 4 des cellules adjacentes ont tendance à se déformer vers l'intérieur de leurs cellules respectives. Les zones de jonction J autour de la cellule sur laquelle l'appui est exercé ont donc tendance à être repoussées vers l'extérieur de cette cellule, parallèlement à la surface d'appui S1.

Inversement, lorsqu'on appuie perpendiculairement à la surface d'appui S1 sur l'ensemble des bases 3 de l'élément amortisseur, les efforts au niveau des différentes zones de jonction J s'équilibrent de sortent que leur position reste sensiblement stable. Les segments on alors davantage tendance à travailler en compression plutôt qu'en flexion. La rigidité globale de l'élément amortisseur est augmentée.

On obtient ainsi des caractéristiques de raideur différentes de l'élément amortisseur selon la surface de la zone sur laquelle un effort est transmis. Plus la zone sur laquelle l'effort est transmis est importante, plus la raideur de l'élément amortisseur peut être importante.

Les figures 15 et 24 illustrent un élément amortisseur 11 selon un deuxième mode de réalisation de l'invention. A l'instar du premier mode de réalisation, l'élément amortisseur 11 comprend également un ensemble de cellules 12 juxtaposées, qui sont bien visibles sur les figures 16 et 25.

Chaque cellule comprend une base 13 et des segments 14 élastiques dont une première extrémité 14A est reliée à la base 13. L'ensemble des bases 13 forme une première surface d'appui et les deuxièmes extrémités 14B de chaque segment forment une deuxième surface d'appui S2. Les bases 13 des cellules 12 peuvent avoir une forme identique aux bases 3 des cellules 2 précédemment décrites. Le deuxième mode de réalisation diffère du premier mode de réalisation présenté plus haut en ce que les segments présentent grossièrement la forme d'un demi-cercle et non une forme d'un quart de cercle. Les zones de jonction J entre les cellules adjacentes ne sont pas positionnées à l'extrémité 14B des segments mais sensiblement à mi-hauteur entre les extrémités 14A et 14B de chaque segment, c'est-à-dire environ à mi-chemin entre les deux extrémités 14A et 14B. Une tangente aux segments à hauteur des zones de jonction J peut être sensiblement perpendiculaire à la surface d'appui S1. Chaque cellule 22 de l'élément amortisseur 21 est donc jointe aux cellules adjacentes par l'intermédiaire de zones de jonction J positionnées sensiblement à mi-hauteur des segments 24. Les cellules 12 ont une enveloppe extérieure présentant grossièrement la forme d'une sphère. En partant de leur première extrémité 14A, les segments s'écartent de la base 13 et convergent les uns vers les autres à hauteur de leur deuxième extrémité 14B sans pour autant entrer en contact entre eux. Autrement dit, les segments 14 ont sensiblement la forme de méridiens.

La figure 17 illustre un élément amortisseur 21 selon un troisième mode de réalisation de l'invention. A l'instar du deuxième mode de réalisation, l'élément amortisseur comprend un ensemble de cellules 22 (figure 18) juxtaposées. Chaque cellule comprend une base 23 et des segments 24 sensiblement identiques à la base 13 et aux segments 14 décrits plus haut. Les cellules 22 comprennent en outre une deuxième base 26, chaque segment 24 des cellules 22 comprenant une deuxième extrémité 24B reliée à la deuxième base 26. La deuxième base 26 peut avoir une forme sensiblement identique à la première base 23. Elle peut donc comprendre une ouverture centrale 27 et une surface de contact, notamment circulaire, s'étendant dans la deuxième surface d'appui S2. En variante, la deuxième base 26 pourrait avoir une forme différente de la première base 23.

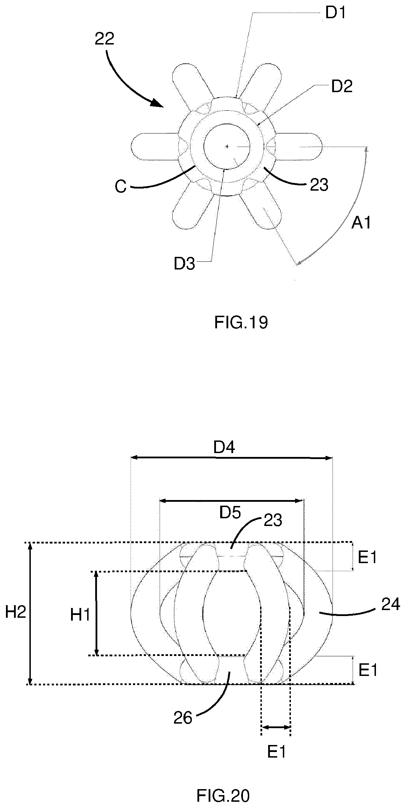

En références aux figures 19 et 20 des ordres de grandeur des dimensions de la cellule 22 sont proposés. Ces mêmes ordres de grandeur peuvent également s'appliquer aux cellules 2 et 12 précédemment décrites puisque ces dernières s'inscrivent dans la forme de la cellule 22. Un diamètre extérieur D1 de la base 23 peut être par exemple compris entre 4mm et 15mm, de préférence entre 5mm et 10mm, de préférence encore entre 7mm et 8mm. Un diamètre D2 de la surface de contact C peut être par exemple compris entre 3mm et 13mm, de préférence entre 4mm et 7mm, de préférence encore entre 5mm et 6mm. Un diamètre intérieur D3 de la base 23 peut être par exemple compris entre 1mm et 6mm, de préférence entre 2mm et 5mm, de préférence encore entre 3mm et 4mm. L'angle A1 séparant deux segments voisins de la cellule peut être égal à 360° divisé par le nombre de segments, soit 60° pour une cellule comprenant six segments répartis uniformément autour de leur base. L'angle séparant deux segments pourrait être différent dans le cas où les segments ne sont pas répartis uniformément autour de la base de la cellule.

En référence à la figure 20, l'épaisseur du fil E1, autrement dit le diamètre de la section circulaire du fil composant la base 23 et les segments 24, peut être comprise entre 1mm et 5mm, de préférence entre 1.5mm et 2.5mm. La cellule présentant une forme globalement sphérique, le diamètre extérieur D4 de la cellule, considéré dans un plan parallèle à la surface d'appui S1 peut être compris entre 10mm et 20mm, notamment entre 12mm et 16mm. La distance D5 séparant deux segments opposés de la même cellule au niveau d'un plan médian de la cellule peut être comprise en 7 et 13mm, notamment entre 8mm et 12mm. La hauteur H1 séparant les deux bases 23 et 26 peut être comprise entre 3mm et 9mm, de préférence entre 5mm et 7mm. La hauteur totale H2 de la cellule peut être comprise entre 6mm et 15mm, de préférence entre 8mm et 12mm.

La figure 21 illustre un élément amortisseur 31 selon un quatrième mode de réalisation de l'invention. L'élément amortisseur 31 comprend encore un ensemble de cellules juxtaposées 32. Les cellules 32 comprennent trois bases 33, 36, 38 qui peuvent avoir une forme sensiblement identique aux bases 3, 13, 23, ou 26 précédemment décrites. La première base 33 est reliée à la deuxième base 36 par l'intermédiaire de premiers segments 34 sensiblement identiques aux segments 14 ou 24 précédemment décrits. La deuxième base 36 est reliée à la troisième base 38 par l'intermédiaire de deuxièmes segments 39 également sensiblement identiques aux segments 14 ou 24 précédemment décrits. Une première extrémité 39A des segments 39 est reliée à la deuxième base 36 et une deuxième extrémité 39B des segments 39 est reliée à la troisième base 38. La première surface d'appui S1 et la deuxième surface d'appui S2 sont formées respectivement par l'ensemble des premières bases 33 et des troisièmes bases 38. La première base 33 de chaque cellule peut s'étendre sensiblement parallèlement à la deuxième base 36 et/ou à la troisième base 38. Les cellules 32 adjacentes sont en contact par l'intermédiaire de deux zones de jonction J1, J2. Une première zone de jonction J1 est positionnée sensiblement à mi-hauteur des premiers segments 34. Une deuxième zone de jonction J2 est positionnée sensiblement à mi-hauteur des deuxièmes segments 39. Selon une variante de réalisation, l'élément amortisseur pourrait comprendre un nombre encore supérieur de bases reliées de la même façon aux bases inférieures et/ou supérieures.

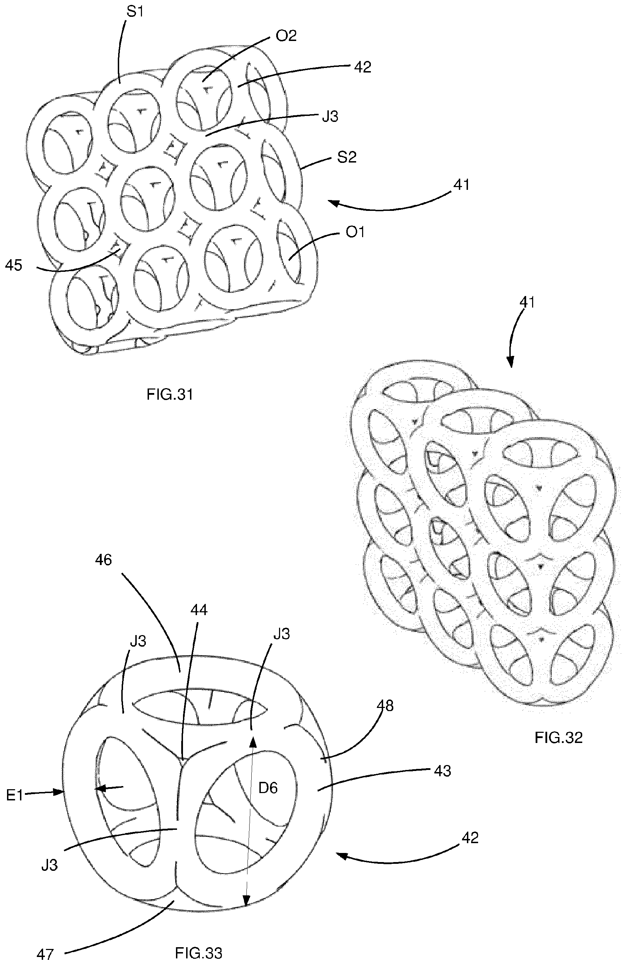

Les figures 31, 32 et 33 illustrent un élément amortisseur 41 selon un cinquième mode de réalisation de l'invention. L'élément amortisseur 41 comprend aussi une structure ouverte. L'élément amortisseur 41 comprend également un ensemble de cellules 42 juxtaposées. Chaque cellule 42 comprend une enveloppe extérieure sensiblement cubique. L'enveloppe extérieure de chaque cellule comprend donc six faces. Chaque cellule comprend quatre faces dites latérales par lesquelles la cellule peut être accolée à une cellule adjacente. Chaque cellule comprend en outre une face dite supérieure et une face dite inférieure. La face inférieure est opposée à la face supérieure. L'ensemble des faces supérieures de chaque cellule peut former la première surface d'appui S1. De même, l'ensemble des faces inférieures de chaque cellule peut former la deuxième surface d'appui S2. L'élément amortisseur 41 est apte à se déformer consécutivement à un appui sur la surface d'appui S1 ou S2.

Les faces latérales de deux cellules adjacentes peuvent être communes ou confondues, c'est-à-dire qu'une seule et même face appartient à la fois à une cellule donnée et à la cellule adjacente à la cellule donnée. Chaque cellule peut avoir jusqu'à quatre cellules adjacentes. L'ensemble des cellules 42 ainsi juxtaposées forme un quadrillage.

En référence à la figure 33, chacune des six faces peut comprendre un élément déformable. En l'espèce, cet élément déformable est un anneau 43 inscrit à l'intérieur de la face. Dans une même cellule, les anneaux appartenant à des faces adjacentes sont en contact ponctuel ou quasi-ponctuel entre eux. Chaque anneau d'une cellule est en contact avec quatre anneaux adjacents par l'intermédiaire de zones jonction J3. Afin d'obtenir une cohésion satisfaisante entre les anneaux d'une même cellule, la taille des zones de jonction J3 peut être adaptée. Les zones de jonction J3 sont donc positionnées sensiblement au milieu de chaque arrête du cube formant l'enveloppe de la cellule.

Par analogie aux cellules 2, 12 et 22 présentées précédemment, l'anneau 43 de la face supérieure peut constituer une première base 46 de la cellule 42. L'anneau 43 de la face inférieure peut constituer une deuxième base 47 de la cellule 42. Les anneaux 43 des faces latérales de la cellule 42 peuvent constituer des segments 48 reliant la première base 46 à la deuxième base 47. Chaque segment 48 peut être vu comme l'association de deux demi-anneaux appartenant à des faces latérales adjacentes d'une même cellule. On peut donc considérer que la cellule 42 comprend quatre segments 48. En variante, chaque segment pourrait être considéré comme l'association de deux demi-segments appartenant à des faces latérales adjacentes d'une même cellule. On pourrait alors considérer que la cellule 42 comprend huit demi-segments.

Le fil constituant les anneaux 43 de chaque cellule peut avoir une section circulaire, ou en variante toute autre forme de section. Le diamètre de ce fil peut être adapté pour obtenir une élasticité ou raideur souhaitée. Chaque cellule peut comprendre une ouverture 44 positionnée sensiblement à chacun des huit sommets de l'enveloppe cubique de la cellule. En considérant, l'élément amortisseur 41 représenté sur la figure 31, on observe qu'une autre ouverture 45 est formée au centre de la réunion de quatre anneaux appartenant à la surface d'appui S1, les quatre anneaux étant agencés en carré. La présence de ces ouvertures 44, 45 peut faciliter la déformation des cellules lorsqu'un appui est exercé sur l'une des faces d'appui S1 ou S2.

Le diamètre D6 de chaque anneau peut être compris entre 5mm et 20mm. L'épaisseur du fil E2, autrement dit le diamètre de la section circulaire du fil composant les anneaux 43, peut être comprise entre 1mm et 5mm, de préférence entre 1.5mm et 2.5mm.

L'élément amortisseur 41 présenté sur les figures 31 et 32 comprend une unique couche de cellules adjacentes, mais en variante il pourrait comprendre plusieurs couches superposées. L'enveloppe cubique pourrait plus généralement avoir une forme parallélépipédique. L'élément amortisseur présenté sur les figures 31 et 32 comprend neuf cellules mais en variante ce nombre pourrait être différent. L'élément déformable agencé sur les faces de chaque cellule pourrait en variante avoir une forme différente de celle d'un anneau, par exemple une forme de polygone ou une forme d'étoile.

Les caractéristiques, les variantes de réalisation et le fonctionnement de l'élément amortisseur qui ont été présentés pour le premier mode de réalisation sont transposables aux éléments amortisseurs 11, 21, 31, 41 présentés ci-dessus. Notamment, les cellules 12, 22, 32 et 42 présentent également une première ouverture O1 orientée latéralement par rapport à la surface d'appui S1 et une deuxième ouverture O2 s'étendant dans la surface d'appui S1

Préférentiellement, les cellules sont monolithiques, c'est-à-dire qu'elles sont fabriquées d'un seul tenant. Les cellules sont fabriquées dans un matériau élastique. Elles peuvent être par exemple constituées d'un matériau polymère, notamment d'un matériau élastomère. Les matériaux utilisés peuvent être des matériaux thermoplastiques, comme par exemple du TPU ou du TPE. Il est également envisageable d'utiliser des matériaux plastiques recyclés.

Selon une variante avantageuse de l'invention, la couche interne et/ou la couche externe peuvent former un ensemble monolithique avec l'élément amortisseur. La couche interne et/ou la couche externe peuvent alors être fabriquées au cours d'une seule et même étape de fabrication, voire dans le même matériau que l'élément amortisseur. La fabrication d'un tel ensemble peut être réalisée, par exemple, par impression 3D ou par moulage.

Alternativement, des matières différentes pour le support et l'élément amortisseur peuvent être utilisées au cours d'une même opération d'impression 3D ou au cours d'un procédé de bi-injection ou de co-injection.

Selon un premier procédé de fabrication, les cellules peuvent être obtenues par moulage, notamment par injection de polymère dans un moule d'injection. En particulier, les cellules 2 présentées aux figures 13 et 14 présentent une forme dite en dépouille, compatible avec l'utilisation d'un moule en deux parties. Les cellules 12, 22, 32 et 42 présentent une forme plus complexe, avec des contre-dépouilles, et également plus difficile à obtenir par moulage. De telles formes pourraient être obtenues par exemple en utilisant des moules à tiroirs et/ou en appliquant un démoulage en force. On pourra donc envisager d'obtenir de telles cellules en soudant des demi-cellules. Par exemple une cellule 22 peut être obtenue en soudant deux à deux les extrémités 4B des segments de deux cellules 2 selon le premier mode de réalisation. Ensuite, on peut souder les différentes cellules entre elles au niveau de leurs zones de jonction J, J1, J2 pour obtenir un élément amortisseur.

Selon une variante, l'élément amortisseur peut être fabriqué par une technique de fabrication additive, par exemple par impression 3D. Cette technique de fabrication est particulièrement adaptée aux formes complexes de l'élément amortisseur. On peut ainsi facilement adapter les dimensions de l'élément amortisseur aux besoins spécifiques d'un utilisateur. Par exemple, la raideur d'un élément amortisseur peut être adaptée en ajustant le diamètre des fils constituant les segments et la base et/ou en adaptant la courbure des segments. Les dimensions de chaque cellule pourraient également être ajustées en fonction de la taille du pied et de la forme de la jambe de l'utilisateur.

L'élément amortisseur peut comprendre une unique cellule centrale avec un ensemble de cellules adjacentes à la cellule centrale, comme cela est représenté par exemple aux figures 13, 15, 17, 31 et 32. Un tel élément amortisseur présente l'avantage d'être plus compact léger et plus facile à intégrer dans une chaussure de ski ou de snowboard.

Avantageusement, l'élément amortisseur est amovible, c'est-à-dire qu'il peut être extrait de l'élément de chaussure de ski ou de snowboard et être remplacé par un autre élément amortisseur. Un utilisateur est alors en mesure de remplacer lui-même l'élément amortisseur lorsqu'il est usé ou lorsqu'il souhaite modifier le comportement de sa chaussure de ski ou de snowboard. Une chaussure de ski ou de snowboard ou un chausson pour une telle chaussure peut être fourni avec différents éléments amortisseurs pour permettre le remplacement de l'élément amortisseur. Les différents éléments amortisseurs fournis peuvent présenter des raideurs différentes ou bien être fournis en tant que pièce de rechange si l'élément amortisseur d'origine devait être endommagé.

En option, une fenêtre ou évidement peut être réalisée au sein de la chaussure de ski ou de snowboard, dans une zone en regard de l'élément amortisseur, pour rendre visible l'élément amortisseur depuis l'extérieur de la chaussure.

En adaptant le nombre de cellules on peut faire varier la taille de l'élément amortisseur sans modifier les cellules en tant que telles. On peut également remplacer certaines cellules de l'élément amortisseur par des cellules plus ou moins rigides afin de modifier le comportement dynamique de l'élément amortisseur et ainsi l'adapter aux aptitudes d'un utilisateur particulier. D'une manière générale, la chaussure de glisse selon l'invention est modulaire et peut être facilement adaptée.

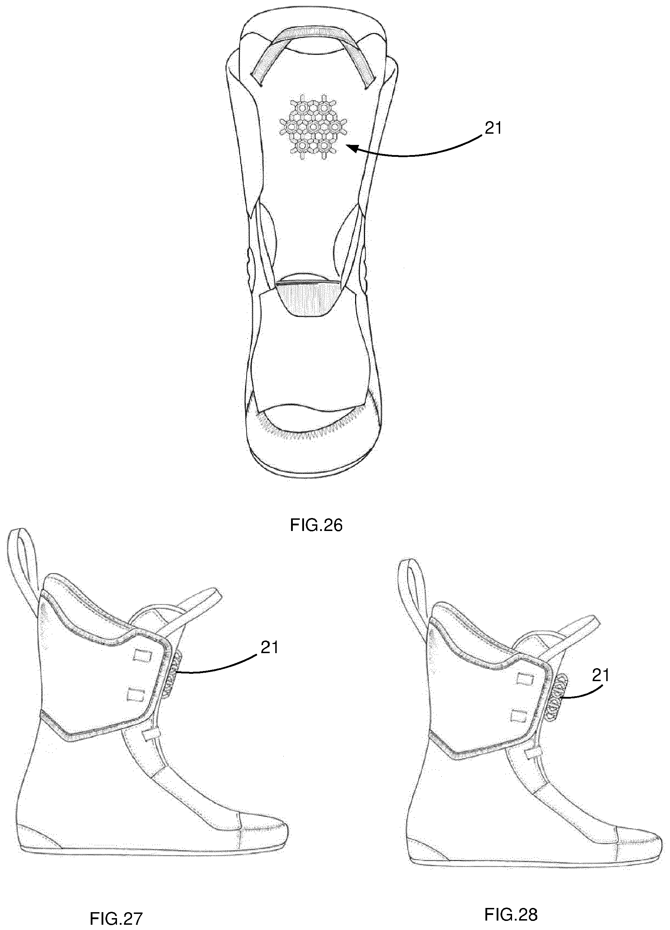

Les figures 26 et 28 illustrent une variante de réalisation du chausson. Selon cette variante de réalisation, un élément amortisseur 21 n'est pas intégré dans la couche intermédiaire de la languette du chausson mais est fixé au-dessus la couche externe plus rigide de la languette, sensiblement en vis-à-vis du tibia. Cette solution présente l'avantage de permettre une intégration de l'élément amortisseur à des chaussons existants sans avoir à modifier leur couche intermédiaire. L'élément amortisseur 21 est fixé pardessus la couche externe du chausson. Il peut par exemple être collé, soudé et/ou encastré à la couche externe du chausson. Il pourrait également être maintenu en place par un moyen de fixation comme par exemple un élastique destiné à faire le tour de la jambe. Dans cette variante, le chausson étant positionné dans une coque de chaussure de ski, l'élément amortisseur prendra position entre la coque et le chausson. En variante, toute autre forme d'élément amortisseur pourrait être envisagée, notamment les éléments amortisseurs 1, 11, 31 et 41 précédemment décrits. En particulier, comme cela apparait sur la figure 27, l'élément amortisseur 21 peut être identique ou similaire à l'élément amortisseur 1 présenté précédemment.

En remarque, un élément amortisseur peut également prendre place dans un logement ou creux aménagé en surface externe du chausson. Ainsi, il dépasse moins de l'extérieur du chausson et est plus facilement maintenu en place.

En variante ou en complément d'un élément amortisseur intégré à la languette 121, le support arrière 122 peut également comprendre un élément amortisseur. L'élément amortisseur peut être constitué d'un agencement de cellules selon l'un quelconque des modes de réalisation présentés précédemment.

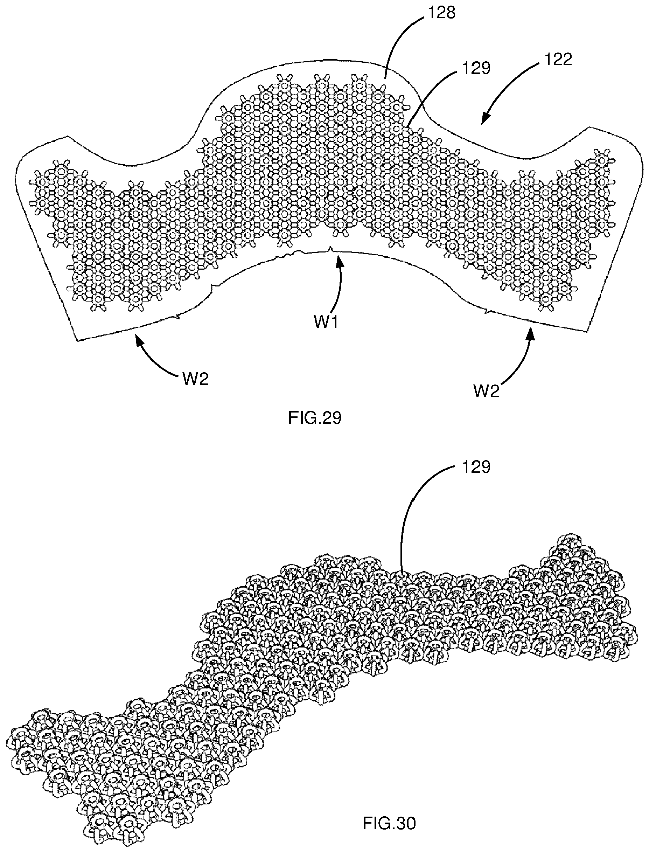

La figure 29 illustre le support arrière 122 en vue à plat. Le support arrière comprend une couche externe 128 sur laquelle est fixé un élément amortisseur 129. Le support arrière 122 présente un corps central W1 d'où s'étendent deux ailes W2. Le corps central W1 est destiné à s'étendre à l'arrière du bas de la jambe et les deux ailes W2 sont destinées à s'étendre sur les côtés latéraux du bas de la jambe. La figure 30 illustre l'élément amortisseur 129. Il comprend un ensemble de cellules identiques aux cellules 22 présentées précédemment. En variante, l'élément amortisseur pourrait présenter des cellules différentes comme par exemple les cellules 2, 12, 32 ou 42 présentées précédemment. Selon une autre variante, l'élément amortisseur pourrait aussi être positionné dans une couche intermédiaire du support arrière et non à la surface de celui-ci. Ainsi, comme pour la languette précédemment décrite, l'élément amortisseur intégré au support arrière pourrait être recouvert d'une part par une couche interne s'étendant sensiblement le long du bas du mollet et d'autre part par une couche externe en contact avec le collier de la coque de la chaussure.

Selon une autre variante (non représentée), l'élément amortisseur pourrait également être intégré à une partie haute et avant de la coque 110 de la chaussure de glisse, par exemple sur la face intérieure de rabats latéraux du collier recouvrant le chausson. L'élément amortisseur pourrait même être un élément séparé de la chaussure de glisse et du chausson et être destiné à être inséré entre le chausson et le bas de la jambe. D'une manière générale, l'élément amortisseur peut être positionné en tout endroit dans lequel il se trouve intercalé entre le bas de la jambe de l'utilisateur et une partie plus rigide de la chaussure, de manière à ce qu'il puisse être comprimé lors de la pratique d'un sport de glisse.

Lorsqu'un skieur utilise des chaussures de ski comprenant un élément pourvu d'un élément amortisseur tel que décrit précédemment, il obtient un effet de rebond permettant un contrôle particulièrement efficace de ses skis. Lorsqu'un utilisateur pratique le ski avec des chaussures de ski selon l'invention, il enchaîne des virages et alterne des phases de flexion et d'extension des jambes. En particulier, lorsque le skieur fléchit une jambe, il comprime progressivement l'élément amortisseur, lequel emmagasine une partie de l'énergie nécessaire pour le comprimer. Lorsque le skieur détend sa jambe l'élément amortisseur restitue l'énergie emmagasinée et soulage les muscles du skieur. Le skieur parvient ainsi à guider ses skis avec plus de précision et avec moins d'effort. Le skieur est ainsi plus performant dans la pratique du ski alpin. L'élément amortisseur produit donc un effet de rebond permettant un contrôle particulièrement dynamique des skis, et plus généralement de la ou des planches de glisse fixées au pied de l'utilisateur.

## Revendications

1. Elément de chaussure de ski ou de snowboard (110, 120, 121, 122), **caractérisé en ce qu'**il comprend un élément amortisseur (1, 11, 21, 31, 41, 130) comprenant au moins une couche formée par un ensemble de cellules (2, 12, 22, 32, 42) juxtaposées, la couche comprenant une surface d'appui (S1), chaque cellule comprenant une structure ouverte apte à se déformer consécutivement à un appui sur ladite surface d'appui (S1).

2. Elément de chaussure de ski ou de snowboard (110, 120, 121, 122) selon la revendication précédente, **caractérisé en ce que** chaque cellule comprend au moins une première ouverture (O1) orientée latéralement par rapport à ladite surface d'appui (S1).

3. Elément de chaussure de ski ou de snowboard (110, 120, 121, 122) selon l'une des revendications précédentes, **caractérisé en ce que** chaque cellule comprend au moins une deuxième ouverture (O2) s'étendant dans ladite surface d'appui (S1).

4. Elément de chaussure de ski ou de snowboard (121) selon l'une des revendications précédentes, **caractérisé en ce qu'**il comprend une zone d'appui tibiale (123), notamment une languette, ledit élément amortisseur s'étendant dans la zone d'appui tibiale.

5. Elément de chaussure de ski ou de snowboard (122) selon l'une des revendications précédentes, **caractérisé en ce qu'**il comprend un support arrière (122) destiné à entourer une partie arrière d'un bas de jambe, ledit élément amortisseur s'étendant au niveau du support arrière.

6. Elément de chaussure de ski ou de snowboard (110, 120, 121, 122) selon l'une des revendications précédentes, **caractérisé en ce qu'**il comprend une couche (124, 126) de support plus rigide que l'élément amortisseur (1, 11, 21, 31, 41, 130) et s'étendant parallèlement à l'élément amortisseur.

7. Elément de chaussure de ski ou de snowboard (120) selon l'une des revendications précédentes, **caractérisé en ce qu'**il comprend une couche interne (126) destinée à s'étendre le long d'une partie d'un pied et/ou le long d'une partie d'un bas de jambe.

8. Elément de chaussure de ski ou de snowboard (120) selon l'une des revendications précédentes, **caractérisé en ce qu'**il comprend une couche externe (124) destinée à s'étendre le long d'une coque (110).

9. Elément de chaussure de ski ou de snowboard (110, 120, 121, 122) selon l'une des revendications précédentes, **caractérisé en ce que** l'élément amortisseur est amovible.

10. Elément de chaussure de ski ou de snowboard (110, 120, 121, 122) selon l'une des revendications précédentes, **caractérisé en ce que** chaque cellule dudit élément amortisseur comprend une première base (3, 13, 23, 33, 46) et un ensemble de segments (4, 14, 24, 34, 48) élastiques dont une première extrémité (4A, 14A, 24A, 34A) est reliée à la première base, les bases de chaque cellule formant ladite surface d'appui (S1), les segments de chaque cellule s'étendant en dehors de ladite surface d'appui (S1), les segments de chaque cellule étant aptes à se déformer consécutivement à un appui sur ladite surface d'appui (S1).

11. Elément de chaussure de ski ou de snowboard (110, 120, 121, 122) selon l'une des revendications 9 ou 10, **caractérisé en ce que** les segments (4, 14, 24, 34, 48) d'une même cellule sont sans contact entre eux.

12. Elément de chaussure de ski ou de snowboard (110, 120, 121, 122) selon l'une des revendications 9 à 11, **caractérisé en ce que** chaque cellule (22, 32) comprend au moins une deuxième base (26, 36, 47), chaque segment (24, 34, 48) de la cellule comprenant une deuxième extrémité (24B, 34B) reliée à la deuxième base.

13. Chausson (120) pour chaussure de ski ou de snowboard, **caractérisé en ce qu'**il comprend un élément de chaussure de ski ou de snowboard (110, 120, 121, 122) selon l'une des revendications précédentes.

14. Chaussure de ski ou de snowboard (100), **caractérisée en ce qu'**elle comprend un élément de chaussure de ski ou de snowboard (110, 120, 121, 122) selon l'une des revendications 1 à 12 et/ou un chausson (120) selon la revendication précédente.

15. Chaussure de ski selon la revendication précédente, **caractérisée en ce qu'**elle comprend un bas de coque (111) et un collier (112) articulé en rotation autour du bas de coque, ladite surface d'appui (S1) s'étendant parallèlement à une partie du collier.
